# FASCICULE DE BREVET EUROPEEN

(11) **EP 3 641 077 B1**
(45) Date de publication et mention de la délivrance du brevet: **02.06.2021**
(21) Numéro de dépôt: 19203535.0
(22) Date de dépôt: 16.10.2019
(51) Int. Cl.: H01R 41/00, H01R 39/58, B60L 5/38

(54) **DISPOSITIF CONNECTÉ DE DÉTECTION DE L'USURE DE LA SEMELLE D'UN FROTTEUR POUR L'ALIMENTATION ÉLECTRIQUE D'UN VÉHICULE**
VERBUNDENE VORRICHTUNG ZUR VERSCHLEISSERKENNUNG DES BELAGS EINES REIBUNGSKONTAKTS FÜR DIE STROMVERSORGUNG EINES FAHRZEUGS
CONNECTED DEVICE FOR DETECTING THE WEAR OF THE SOLE OF A CONTACT SHOE FOR SUPPLYING ELECTRICITY TO A VEHICLE

(30) Priorité: 16.10.2018 FR 1859575
(43) Date de publication de la demande: 22.04.2020
(73) Titulaire: ALSTOM Transport Technologies, 93400 Saint-Ouen (FR)
(72) Inventeur: PEREIRA, Jorge, 64200 BIARRITZ (FR); BONAGLIA, David, 33420 CABARA (FR); FISCHMAN, Arao, 75012 PARIS (FR)
(74) Mandataire: Lavoix

(56) Documents cités:
- WO-A1-2017/001800
- US-A1- 2009 206 695

## Description

L'invention a pour domaine celui des systèmes d'alimentation électrique par conduction de véhicules électriques, en particulier des systèmes d'alimentation électrique par le sol.

Par « véhicule électrique », on entend tout type de véhicule propre à capter, au cours de son déplacement, une puissance électrique à partir d'un système d'alimentation électrique. Le cas d'un tramway et d'un système d'alimentation par le sol est plus particulièrement mis en avant dans la suite de la description, mais d'autres types de véhicules (véhicules guidés tels que trains, métros ou l'équivalent, ou non-guidés tels que des voitures de tourisme, des camions ou l'équivalent) et de systèmes d'alimentation (rails d'alimentation, lignes aériennes de contact, etc.) peuvent être concernés.

Au cours de son déplacement, la semelle d'un frotteur du tramway vient en contact glissant d'un rail d'alimentation en puissance électrique implanté dans la voie. La semelle constitue une pièce d'usure, dont la hauteur diminue au fil du temps.

Pour surveiller l'état d'usure de la semelle d'un frotteur, il est connu d'usiner un trait horizontal sur le côté de la semelle, qui est une pièce métallique en fonte.

Ce témoin d'usure donne à un opérateur une information sur l'état d'usure de la semelle par inspection visuelle, lors d'un contrôle de maintenance réalisé alors que le tramway est placé au-dessus d'une fosse.

L'efficacité de ce contrôle d'usure dépend donc notamment de la fréquence des contrôles de maintenance, ce qui impose une mise hors service du tramway. Ceci n'est pas compatible d'une exploitation optimale du matériel.

Par ailleurs, le document WO2007/001800 divulgue un dispositif de détection d'usure du type dispositif de détection d'usure pour une semelle d'un frotteur d'un système de captage de puissance électrique embarqué à bord d'un véhicule électrique, la semelle permettant de capter une puissance électrique par contact avec un élément conducteur d'un système d'alimentation électrique, le dispositif de détection d'usure comportant : un témoin d'usure, destiné à être intégré dans l'épaisseur de la semelle et comportant : un noyau, destiné à devenir apparent sur une surface d'usure de la semelle et à être ainsi mis en contact de l'élément conducteur du système d'alimentation électrique ; et une unité de mesure d'une grandeur électrique du noyau propre à générer un signal d'usure en fonction d'une valeur mesurée de ladite grandeur électrique.

L'invention a donc pour but de répondre à ce problème.

Pour cela l'invention a pour objet un dispositif de détection d'usure du type précité conforme aux revendications annexées.

L'invention concerne également une semelle pour un frotteur d'un système de captage de puissance électrique embarqué à bord d'un véhicule électrique, la semelle permettant de capter une puissance électrique par contact avec un élément conducteur d'un système d'alimentation électrique, la semelle étant équipée d'au moins un dispositif de détection d'usure tel que défini ci-dessus.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- la figure 1 est une représentation schématique, en perspective et en coupe partielle, d'une semelle équipée d'un dispositif de détection d'usure selon un mode de réalisation préféré de l'invention ; et,
- la figure 2 est une représentation électrique du circuit du boîtier du dispositif de détection d'usure de la figure 1.

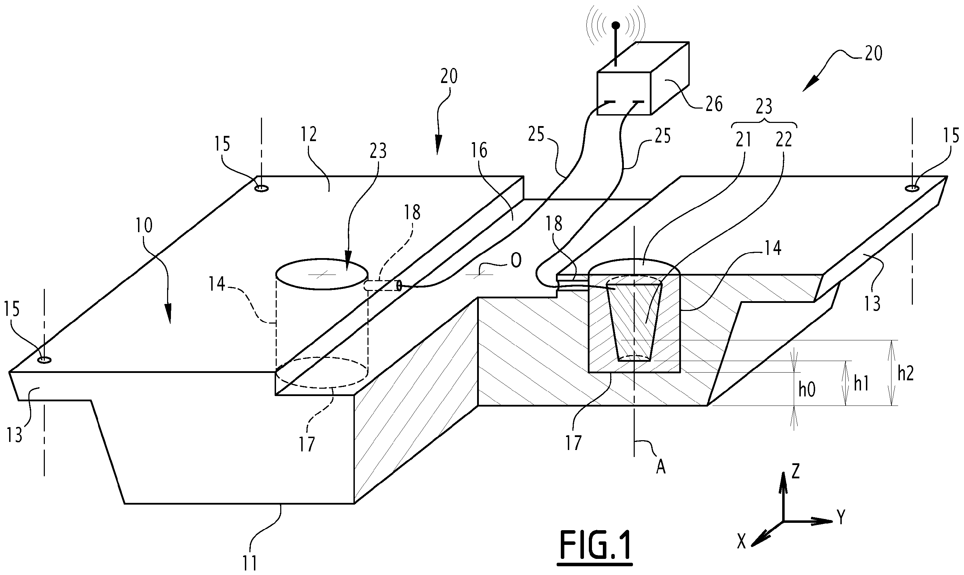

La figure 1 représente la semelle 10 d'un frotteur d'un tramway. Celle-ci est destinée à venir en contact glissant sur un rail d'alimentation implanté dans la voie, d'un système d'alimentation électrique par le sol.

La semelle 10 de la figure 1 est sensiblement identique à celle de l'état de la technique. Il s'agit d'une structure métallique, par exemple en fonte, permettant de prélever une puissance électrique élevée sur le rail d'alimentation. En variante, la semelle est réalisée dans un autre matériau, adapté à sa fonction.

Un trièdre XYZ est associé à la semelle 10, de sorte que l'axe Z corresponde sensiblement à la direction verticale lorsque la semelle est montée sur le frotteur d'un tramway. Les directions X et Y définissent un plan sensiblement horizontal. La direction X correspond à la direction longitudinale du tramway et donc à la direction longitudinale du rail d'alimentation.

En vue de dessus, la semelle 10 est rectangulaire. La semelle 10 est symétrique par rapport à ses deux plans médians verticaux YZ et XZ.

En section verticale dans le plan parallèle au plan YZ, la semelle 10 a la forme d'un trapèze.

La face inférieure 11 de la semelle 10, correspondant à la petite base du trapèze, est destinée à venir en contact du rail d'alimentation.

La face supérieure 12 de la semelle 10 constitue la grande base du trapèze. Elle est destinée à permettre le montage de la semelle sur le frotteur. Pour cela, la semelle 10 comporte deux ailes latérales 13, droite et gauche, qui sont munies de perçages 15, adaptés pour la réception de moyens de fixation sur le frotteur.

La face supérieure 12 comporte également une dépression centrale selon la direction X, formant un canal 16 pour la circulation de câbles électriques.

De part et d'autre de ce canal 16, la face supérieure 12 de la semelle 10 selon l'invention comporte deux trous borgnes 14. Le fond 17 de chaque trou borgne 14 est à une hauteur h0 de la face inférieure 11 de la semelle 10.

Des orifices latéraux 18 connectent chaque trou borgne 14 au canal 16 pour le passage des fils électriques des dispositifs de détection d'usure selon l'invention.

Comme représenté sur la figure 1, le dispositif de détection d'usure 20 comporte un témoin d'usure 23, un boîtier électronique de mesure 26 et un fil électrique 25 connectant le témoin d'usure 23 au boîtier 26.

Le témoin d'usure 23 comporte un noyau 22 métallique, enrobé dans un matériau isolant, notamment du plastique, formant une enveloppe 21.

Le noyau 22 est avantageusement de forme tronconique, selon un axe A destiné à coïncider avec l'axe vertical du trou borgne 14 de réception du témoin d'usure 23.

Par exemple, le diamètre du noyau 22 évolue le long de l'axe A, par exemple encore le diamètre augmente lorsqu'on se déplace verticalement de bas en haut le long de l'axe A, le noyau ayant la forme d'un tronc de cône. En variante, d'autres géométries du noyau sont envisageables.

L'enveloppe 21 entoure complètement le noyau 22 de manière à conférer au témoin d'usure 23 une forme cylindrique, dont le diamètre correspond à celui du trou borgne 14 de réception du témoin d'usure 23.

En particulier, la face inférieure du noyau est placée à distance du fond 17 du trou borgne 14 de manière à assurer une isolation électrique entre le noyau 22 et la semelle 10. La face inférieure du noyau 22 est donc à une hauteur h1 de la face inférieure 11 de la semelle 10.

Le fil 25 du dispositif de détection d'usure 20 est connecté électriquement au noyau 22 au voisinage de sa face supérieure. Il circule à travers l'enveloppe 21 puis à travers l'orifice 18 depuis le trou borgne 14 vers le canal 16 et enfin le long du canal 16 vers le boîtier 26 distant.

Le fil 25 est par exemple en cuivre. Il est isolé et blindé.

Au cours de l'usure progressive de la semelle 10, le témoin d'usure 23 finit par être apparent sur la face inférieure 11 de la semelle 10. Le noyau 22 est progressivement exposé de sorte que lorsque la semelle 11 est en contact du rail d'alimentation, le noyau 22 est porté au potentiel du rail d'alimentation.

Le fil 25 permet donc de ramener la tension du noyau 22 au niveau du boîtier 26.

Le boîtier 26 permet de mesurer la tension du noyau 22.

Cette tension étant une haute tension lorsque le rail d'alimentation est électrisé, par exemple 750 V, il est nécessaire que le boîtier 26 assure une isolation galvanique avec les composants de mesure basse tension.

Le boîtier 26 est propre à traiter la tension mesurée, de manière à générer un signal de mesure.

Enfin le boîtier 26 assure de préférence une transmission sans fil de l'information d'usure vers un dispositif de maintenance distant, par exemple une console comportant une interface homme/machine adaptée sur laquelle l'état d'usure de la semelle est présenté à un opérateur. En variante, une transmission filaire est envisageable et, plus généralement, tout autre moyen de communication adapté peut être mis en œuvre.

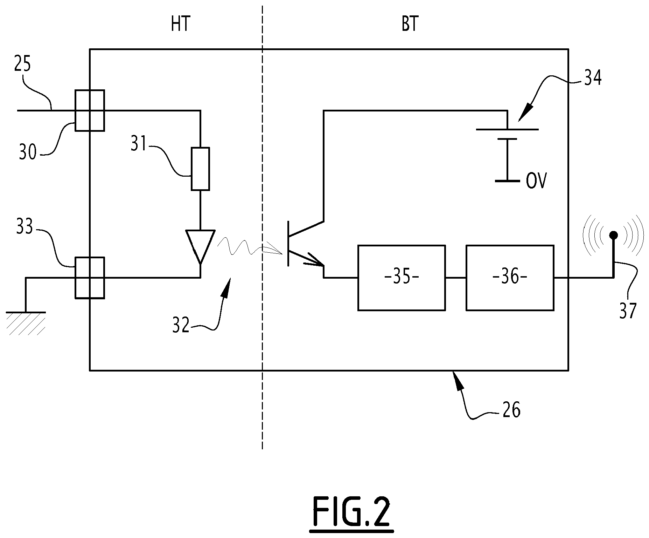

Le circuit électrique du boîtier 26 du dispositif de détection d'usure 20 est représenté à la figure 2.

Le boitier 26 peut être implanté à l'intérieur du tramway.

Il comporte des connecteurs 30 et 33 permettant respectivement le raccordement au fil électrique 25 relié au noyau 22 et à un fil électrique de connexion à une masse (par exemple la caisse du véhicule électrique).

Le boîtier 26 comporte une partie haute tension HT et une partie basse tension BT. La partie haute tension HT comporte, entre l'extrémité du fil 25 et une masse, une résistance 31 en série d'une diode électroluminescente d'un optocoupleur 32. La résistance 31 permet de transformer la différence de potentiel entre le fil 25 et la masse, en un courant. La diode émet alors un signal lumineux proportionnel à l'intensité de ce courant.

Du côté basse tension BT, le boîtier 26 comporte une source de puissance électrique 34, telle qu'une pile, dont une borne est connectée à un point de tension de référence, par exemple 0 Volt, et dont l'autre borne est connectée au convertisseur optique/électrique de l'optocoupleur 32. Ce dernier est propre à collecter le signal lumineux généré par la diode et à le transformer en un signal électrique.

Le boîtier 26 comporte un microcontrôleur 35 propre à traiter le signal électrique en sortie de l'optocoupleur 32.

Le microcontrôleur 35 est propre à générer un signal d'usure qui est un signal binaire prenant la valeur « 0 » lorsque la tension du noyau 22 est sensiblement nulle, c'est-à-dire lorsque le noyau 22 est isolé de la semelle 10, c'est-à-dire encore lorsque la semelle 10 n'est pas usée ; et la valeur « 1 » lorsque la tension du noyau 22 est élevée, c'est-à-dire lorsque le noyau 22 est en contact avec le rail d'alimentation, c'est-à-dire encore lorsque la semelle 10 est usée.

Le boîtier 26 comporte un module d'émission 36 connecté à une antenne 37 et propre à transmettre le signal d'usure, selon un protocole adapté.

L'information transmise est destinée à être reçue et traitée par une console distante. Est alors affichée sur l'interface homme/machine de la console une information de type tout ou rien relative à l'état d'usure de la semelle 10.

Comme indiqué ci-dessus, le noyau 22 est avantageusement de forme tronconique. Ainsi, au-delà d'une usure h1 de la semelle, le diamètre de la section exposée du noyau 22 sur la face inférieure 11 de la semelle 10 augmente.

Lors d'un contrôle de maintenance et le positionnement du tramway au-dessus d'une fosse, la mesure par un opérateur du diamètre apparent du noyau 22 constitue une mesure quantitative de l'usure h2 de la semelle 10.

Ce type de contrôle qui nécessite l'immobilisation du tramway peut n'intervenir que lorsque le signal d'usure prend la valeur unité. Ceci évite d'avoir à immobilier le tramway alors que le témoin d'usure 23 n'est pas apparent, c'est-à-dire alors que la semelle n'est pas usée.

Avantageusement, l'enveloppe 21 du témoin d'usure 23 est constituée d'une pluralité de sections s'étageant le long de l'axe A, chaque section étant réalisée dans un plastique ayant une couleur spécifique.

Par exemple, l'enveloppe 21 comporte, dans sa partie inférieure, trois sections successives de couleurs orange, rouge et noire.

Ainsi, au fur et à mesure de l'usure de la semelle 10, la couleur du plastique de la section exposée de l'enveloppe 21 au niveau de la face inférieure 11 de la semelle 10 donne une indication visuelle de l'état d'usure de la semelle 10. Cette information qualitative vient avantageusement en complément de l'information tout ou rien du signal d'usure et éventuellement de la mesure quantitative du diamètre du noyau 22.

Ainsi, par exemple une pastille de couleur orange indique à l'opérateur que la semelle n'est presque pas usée et que l'électrode que constitue le noyau 22 n'est pas encore découverte (usure entre h0 et h1).

Une couronne orange indique que le noyau 22 est découvert, mais que l'usure de la semelle reste faible.

Une couronne rouge indique que le noyau 22 est découvert et que l'usure de la semelle est moyenne.

Enfin, une couronne noire indique que le noyau 22 est découvert et que l'usure de la semelle est importante, nécessitant par exemple le remplacement de la semelle.

Le microcontrôleur 35 peut être programmé pour réaliser la mesure de l'usure tous les n jours. Cette période peut être ajustée au cours du temps pour réaliser un plus grand nombre de mesures alors que le temps d'utilisation de la semelle augmente et que les risques d'usure sont plus importants.

Cette modulation de la périodicité des mesures permet une économie de la source de puissance électrique du boîtier 26, lorsque ce dernier est autonome et possède sa propre source d'énergie.

Si la mesure courante révèle que le noyau 22 est exposé, la fréquence de mesure peut être constante et/ou plus élevée de manière à transmettre une information adaptée.

La transmission du signal d'usure peut être faite uniquement lorsque ce signal prend la valeur unité, c'est-à-dire lorsque le noyau 22 est exposé. Cependant, la transmission du signal d'usure même lorsqu'il prend la valeur nulle constitue une indication selon laquelle le dispositif 20 est fonctionnel.

En variante, les informations qualitative de couleur de l'enveloppe et/ou quantitative sur le diamètre exposé du noyau peuvent être surveillées par des moyens électroniques adaptés. Dans ce cas, le boîtier, en plus d'une information du type « tout ou rien » (électrode activée ou non activée), transmet une information plus détaillée. Peuvent alors être mis en oeuvre des moyens de mesure, du type ultrasonique ou laser par exemple.

Dans une variante de réalisation, le noyau n'est plus métallique, mais réalisé dans un matériau conducteur présentant une résistance électrique.

Dans ce cas la mesure de la résistance totale du noyau à l'instant courant constitue une mesure de l'usure. L'homme du métier sait comment modéliser la résistance totale du noyau en fonction de l'usure, en tenant compte notamment de la géométrie du noyau et de la manière dont celui-ci est implanté dans la semelle du frotteur.

Dans une telle variante, l'unité de mesure est adaptée pour mesurer la tension entre deux points opposés du noyau et le courant circulant à travers le noyau, le rapport de ces deux grandeurs électriques associées au noyau permettant d'obtenir une mesure de la résistance totale à l'instant courant et par conséquent de l'usure de la semelle.

## Revendications

1. Dispositif de détection d'usure (20) pour une semelle (10) d'un frotteur d'un système de captage de puissance électrique embarqué à bord d'un véhicule électrique, la semelle (10) permettant de capter une puissance électrique par contact avec un élément conducteur d'un système d'alimentation électrique, le dispositif de détection d'usure (20) comportant :
- un témoin d'usure (23), destiné à être intégré dans l'épaisseur de la semelle (11) et comportant : un noyau (22), destiné à devenir apparent sur une surface d'usure de la semelle (10) et à être ainsi mis en contact de l'élément conducteur du système d'alimentation électrique ; et,
- une unité (26) de mesure d'une grandeur électrique du noyau (22) propre à générer un signal d'usure en fonction d'une valeur mesurée de ladite grandeur électrique.
le dispositif de détection d'usure étant **caractérisé en ce que** l'unité (26) de mesure comporte une partie haute tension (HT) et une partie basse tension (BT), couplées optoélectriquement l'une à l'autre.

2. Dispositif (20) selon la revendication 1, dans lequel le noyau (22) est métallique de manière à constituer une électrode, ladite grandeur électrique étant un potentiel auquel est porté le noyau (22).

3. Dispositif (20) selon la revendication 1, dans lequel le noyau (22) est en un matériau présentant une résistance électrique de manière à constituer une résistance variable, ladite grandeur électrique étant une tension entre des points opposés du noyau (22) et/ou une intensité d'un courant à travers le noyau (22).

4. Dispositif (20) selon l'une quelconque des revendications 1 à 3, dans lequel une enveloppe (21) isole le noyau (22) de la semelle (10).

5. Dispositif (20) selon la revendication 4, dans lequel l'enveloppe (21) comporte une pluralité de sections de couleurs différentes empilées selon une direction orthogonale à la surface d'usure de la semelle (10).

6. Dispositif (20) selon l'une quelconque des revendications 1 à 5, dans lequel le noyau (22) est connecté à l'unité (26) de mesure par au moins un fil électrique (25).

7. Dispositif (20) selon l'une quelconque des revendications 1 à 6, dans lequel le noyau (22) est tronconique.

8. Dispositif (20) selon l'une quelconque des revendications 1 à 7, dans lequel l'unité (26) de mesure est propre à transmettre le signal d'usure par un moyen de radiocommunication.

9. Semelle (10) pour un frotteur d'un système de captage de puissance électrique embarqué à bord d'un véhicule électrique, la semelle (10) permettant de capter une puissance électrique par contact avec un élément conducteur d'un système d'alimentation électrique, **caractérisée en ce que** la semelle (10) est équipée d'au moins un dispositif de détection d'usure (20) selon l'une quelconque des revendications 1 à 8.

## Patentansprüche

1. Vorrichtung zur Verschleißerfassung (20) für einen Belag (10) eines Schleifschuhs eines Systems zum Abnehmen von elektrischer Leistung, welches sich an Bord eines elektrischen Fahrzeugs befindet, wobei der Belag (10) es erlaubt, eine elektrische Leistung durch Kontakt mit einem Leiterelement eines Systems zur elektrischen Stromversorgung abzunehmen, wobei die Vorrichtung zur Verschleißerfassung (20) aufweist:
- einen Verschleißanzeiger (23), welcher dazu bestimmt ist, in die Dicke des Belags (11) integriert zu sein und aufweist: einen Kern (22), welcher dazu bestimmt ist, auf einer Verschleißfläche des Belags (10) sichtbar zu werden und infolgedessen in Kontakt mit dem Leiterelement des Systems zur elektrischen Stromversorgung zu kommen, und
- eine Einheit (26) zum Messen einer elektrischen Größe des Kerns (22), welche zu geeignet ist, ein Verschleißsignal in Abhängigkeit von dem gemessenen Wert der elektrischen Größe zu erzeugen,
wobei die Vorrichtung zur Verschleißerfassung **dadurch gekennzeichnet ist, dass** die Einheit (26) zum Messen einen Hochspannungsabschnitt und einen Niedrigspannungsabschnitt aufweist, welche optoelektrisch miteinander gekoppelt sind.

2. Vorrichtung (20) gemäß dem Anspruch 1, wobei der Kern (22) metallisch ist, so dass eine Elektrode bildet wird, wobei die elektrische Größe ein Potential ist, auf welches der Kern (22) gebracht wird.

3. Vorrichtung (20) gemäß dem Anspruch 1, wobei der Kern (22) aus einem Material ist, welches einen elektrischen Widerstand aufweist, so dass ein variabler Widerstand gebildet wird, wobei die elektrische Größe eine Spannung zwischen gegenüberliegenden Punkten des Kerns (22) und/oder eine Stärke eines Stroms durch den Kern (22) ist.

4. Vorrichtung (20) gemäß einem der Ansprüche 1 bis 3, wobei eine Hülle (21) den Kern (22) vom Belag (10) isoliert.

5. Vorrichtung (20) gemäß Anspruch 4, wobei die Hülle (21) eine Mehrzahl von Abschnitten mit unterschiedlichen Farben, welche entlang einer Richtung, die senkrecht zur Verschleißfläche des Belags (10) ist, gestapelt sind, aufweist.

6. Vorrichtung (20) gemäß einem der Ansprüche 1 bis 5, wobei der Kern (22) mittels mindestens einer elektrischen Leitung (25) mit der Einheit (26) zum Messen verbunden ist.

7. Vorrichtung (20) gemäß einem der Ansprüche 1 bis 6, wobei der Kern (22) kegelstumpfförmig ist.

8. Vorrichtung (20) gemäß einem der Ansprüche 1 bis 7, wobei die Einheit (26) zum Messen dazu geeignet ist, das Verschleißsignal mittels eines Funkkommunikationsmittels zu übermitteln.

9. Belag (10) für einen Schleifschuh eines Systems zum Abnehmen von elektrischer Leistung, welches sich an Bord eines elektrischen Fahrzeugs befindet, wobei der Belag (10) es erlaubt, eine elektrische Leistung durch Kontakt mit einem Leiterelement eines Systems zur elektrischen Stromversorgung abzunehmen, **gekennzeichnet dadurch, dass** der Belag (10) mit mindestens einer Vorrichtung zur Verschleißerfassung (20) gemäß einem der Ansprüche 1 bis 8 versehen ist.

## Claims

1. Wear detection device (20) for a sole (10) of a contact shoe of an on-board electrical power collection system of an electric vehicle, the sole (10) making it possible to collect electrical power by contact with a conductive element of an electrical supply system, the wear detection device (20) comprising:
- a wear indicator (23), intended to be integrated into the thickness of the sole (11) and comprising: a core (22), intended to become visible on a wear surface of the sole (10) and to thus be brought into contact with the conductive element of the electrical supply system; and
- a unit (26) for measuring an electrical quantity of the core (22) suitable for generating a wear signal depending on a measured value of said electrical quantity,
the wear detection device being **characterised in that** the measuring unit (26) comprises a high-voltage part (HT) and a low-voltage part (BT) that are optoelectrically coupled to one another.

2. Device (20) according to claim 1, wherein the core (22) is made of metal so as to constitute an electrode, said electrical quantity being a potential to which the core (22) is raised.

3. Device (20) according to claim 1, wherein the core (22) is made of a material having an electrical resistance so as to constitute a variable resistor, said electrical quantity being a voltage between opposite points of the core (22) and/or an intensity of a current through the core (22).

4. Device (20) according to any of claims 1 to 3, wherein a casing (21) insulates the core (22) from the sole (10).

5. Device (20) according to claim 4, wherein the casing (21) comprises a plurality of portions of different colours stacked in a direction that is orthogonal to the wear surface of the sole (10).

6. Device (20) according to any of claims 1 to 5, wherein the core (22) is connected to the measuring unit (26) by at least one electric wire (25).

7. Device (20) according to any of claims 1 to 6, wherein the core (22) is frusto-conical.

8. Device (20) according to any of claims 1 to 7, wherein the measuring unit (26) is suitable for transmitting the wear signal via a radio communication means.

9. Sole (10) for a contact shoe of an on-board electrical power collection system of an electric vehicle, the sole (10) making it possible to collect electric power by contact with a conductive element of an electrical supply system, **characterised in that** the sole (10) is equipped with at least one wear detection device (20) according to any of claims 1 to 8.
